(19) Europäisches Patentamt
European Patent Office
Office européen des brevets

(11) Veröffentlichungsnummer: **0 515 844 B1**

# (12) EUROPÄISCHE PATENTSCHRIFT

(45) Veröffentlichungstag der Patentschrift: **27.12.95**

(51) Int. Cl.[6]: **C09B 62/026**, C09B 62/447, C09B 62/507

(21) Anmeldenummer: **92107098.3**

(22) Anmeldetag: **25.04.92**

## (54) Phenylazo- oder Naphthylazobenzole mit mehreren reaktiven Ankern

(30) Priorität: **23.05.91 DE 4116785**

(43) Veröffentlichungstag der Anmeldung:
**02.12.92 Patentblatt 92/49**

(45) Bekanntmachung des Hinweises auf die Patenterteilung:
**27.12.95 Patentblatt 95/52**

(84) Benannte Vertragsstaaten:
**CH DE FR GB IT LI**

(56) Entgegenhaltungen:
**EP-A- 0 174 909**
**EP-A- 0 265 857**
**EP-A- 0 407 871**
**US-A- 4 855 411**

(73) Patentinhaber: **BASF Aktiengesellschaft**
**Carl-Bosch-Strasse 38**
**D-67063 Ludwigshafen (DE)**

(72) Erfinder: **Siegel, Bernd, Dr.**
**Faberstrasse 39**
**W-6700 Ludwigshafen (DE)**
Erfinder: **Patsch, Manfred, Dr.**
**Fritz-Wendel-Strasse 4**
**W-6706 Wachenheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 515 844 B1

## Beschreibung

Die vorliegende Erfindung betrifft neue Reaktivfarbstoffe der Formel I

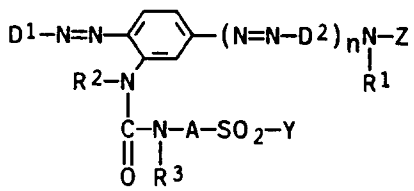

(I),

in der

| | |
|---|---|
| n | 0 oder 1, |
| $R^1$, $R^2$ und $R^3$ | gleich oder verschieden sind und unabhängig voneinander jeweils Wasserstoff, $C_1$-$C_4$-Alkyl oder Phenyl, |
| A | $C_2$-$C_8$-Alkylen, das gegebenenfalls durch 1 bis 3 Sauerstoffatome, Iminogruppen oder $C_1$-$C_4$-Alkyliminogruppen unterbrochen ist, |
| Y | Vinyl oder einen Rest der Formel -$CH_2$-$CH_2$-Q, wobei Q für eine unter alkalischen Reaktionsbedingungen abspaltbare Gruppe steht, |
| $D^1$ | Phenyl oder Naphthyl, wobei diese Reste ein- oder mehrfach durch Hydroxysulfonyl, Carboxyl, $C_1$-$C_4$-Alkoxycarbonyl, Cyano, $C_1$-$C_4$-Alkyl, $C_1$-$C_4$-Alkoxy, Halogen, Nitro oder Vinylsulfonyl oder einfach durch gegebenenfalls substituiertes Phenylazo oder gegebenenfalls substituiertes Naphthylazo substituiert sein können, |
| $D^2$ | gegebenenfalls substituiertes Phenylen oder gegebenenfalls substituiertes Naphthylen und |
| Z | einen reaktiven Rest bedeuten, |

mit der Maßgabe, daß

a) n null bedeutet, wenn $D^1$ durch gegebenenfalls substituiertes Phenylazo oder gegebenenfalls substituiertes Naphthylazo substituiert ist, und

b) der reaktive Rest Z sich nicht aus der Triazinreihe ableitet, wenn n null und $D^1$ Dihydroxysulfonylphenyl oder Trihydroxysulfonylnaphthyl bedeuten,

sowie die Verwendung der neuen Farbstoffe zum Färben oder Bedrucken von Hydroxygruppen oder Stickstoffatome aufweisenden Fasern.

Aus der EP-A-174 909 sind Reaktivfarbstoffe bekannt, die als reaktive Gruppe den Vinylsulfonylrest aufweisen, wobei dieser über eine Ureidogruppe an den Farbstoffrest geknüpft ist.

Farbstoffe der Formel I, in der n null, $D^1$ Dihydroxysulfonylphenyl oder Trihydroxysulfonylnaphthyl und Z einen reaktiven Rest aus der Triazinreihe bedeuten, sind in der älteren Patentanmeldung EP-A-437 669 beschrieben.

Aufgabe der vorliegenden Erfindung war es, neue Reaktivfarbstoffe bereitzustellen, die ebenfalls eine Vinylsulfonylgruppe aufweisen, welche über eine Ureidogruppe an den Chromophor gebunden ist, wobei die neuen Farbstoffe günstige anwendungstechnische Eigenschaften aufweisen sollten.

Demgemäß wurden die eingangs näher bezeichneten Reaktivfarbstoffe der Formel I gefunden.

Alle in der obengenannten Formel I auftretenden Alkyl- und Alkylengruppen können sowohl geradkettig als auch verzweigt sein.

Reste $R^1$, $R^2$ und $R^3$ sind z.B. Methyl, Ethyl, Propyl, Isopropyl, Butyl, Isobutyl oder sec-Butyl.

Reste A sind z.B. $-(CH_2)_2-$, $-(CH_2)_3-$, $-(CH_2)_4-$, $-(CH_2)_5-$, $-(CH_2)_6-$, $-(CH_2)_7-$, $-(CH_2)_8-$, $-CH(CH_3)-CH_2-$, $-CH(CH_3)-CH(CH_3)-$, $-(CH_2)_2-O-(CH_2)_2-$,$-(CH_2)_2-NH-(CH_2)_2-$, $-(CH_2)_2-N(CH_3)-(CH_2)_2-$, $-(CH_2)_2-O-(CH_2)_2-O-(CH_2)_2-$ oder $-(CH_2)_2-O-(CH_2)_2-O-(CH_2)_2-O-(CH_2)_2-$.

Q in Formel I steht u.a. für eine unter alkalischen Reaktionsbedingungen abspaltbare Gruppe. Solche Gruppen sind z.B. Chlor, $OSO_3H$, $SSO_3H$, $OP(O)(OH)_2$, $C_1$-$C_4$-Alkylsulfonyloxy, Phenylsulfonyloxy, $C_1$-$C_4$-Alkanoyloxy, $C_1$-$C_4$-Dialkylamino oder ein Rest der Formel

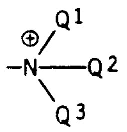 An$^{\ominus}$ , 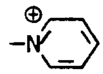 An$^{\ominus}$ , 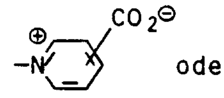 oder 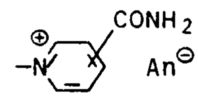 An$^{\ominus}$ ,

wobei $Q^1$, $Q^2$ und $Q^3$ gleich oder verschieden sind und unabhängig voneinander jeweils die Bedeutung von $C_1$-$C_4$-Alkyl oder Benzyl und An$^{\ominus}$ jeweils die Bedeutung eines Anions besitzen. (Geeignete Anionen sind z.B. Fluorid, Chlorid, Bromid, Iodid, Mono-, Di- oder Trichloracetat, Methansulfonat, Benzolsulfonat oder 2- oder 4-Methylbenzolsulfonat.)

Wenn $D^1$ Phenyl oder Naphthyl bedeutet, das einfach durch substituiertes Phenylazo oder substituiertes Naphthylazo substituiert ist, oder wenn $D^2$ substituiertes Phenylen oder substituiertes Naphthylen bedeutet, so können als geeignete Substituenten dafür Hydroxysulfonyl oder der Rest $-NR^2-CO-NR^3-A-SO_2-Y$, worin $R^2$, $R^3$, A und Y jeweils die obengenannte Bedeutung besitzen, in Betracht kommen. Die Phenylkerne sind dabei in der Regel ein- oder zweifach durch Hydroxysulfonyl oder einfach durch den Rest $-NR^2-CO-NR^3-A-SO_2-$ und die Naphthylkerne ein- bis dreifach durch Hydroxysulfonyl oder einfach durch den Rest $-NR^2-CO-NR^3-A-SO_2-Y$ substituiert.

Reste $D^1$ sind z.B. 2,4-Dihydroxysulfonylphenyl, 2,5-Dihydroxysulfonylphenyl, 2,5-Dihydroxysulfonyl-4-methylphenyl, 2,5-Dihydroxysulfonyl-6-chlorphenyl, 3,6,8-Trihydroxysulfonylnaphth-2-yl, 4,6,8-Trihydroxysulfonylnaphth-2-yl,1,5-Dihydroxysulfonylnaphth-2-yl oder 1,6-Dihydroxysulfonylnaphth-2-yl.

Reaktive Reste Z leiten sich z.B. aus der heterocyclischen oder der aliphatischen Reihe ab.

Geeignete reaktive Reste Z gehorchen z.B. der Formel

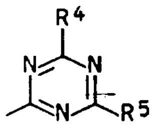 , 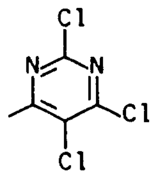 , 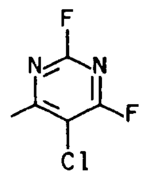 , 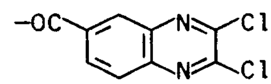 ,

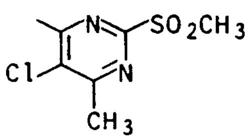 , 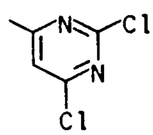 , 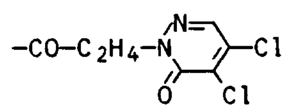 ,

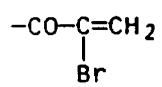 , 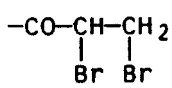 ,

$-CO-CH=CH_2$ ,

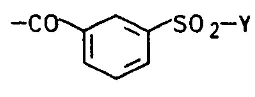 ,

$-CO-CH_2-Cl$ , $-CO-C_2H_4-Cl$ ,

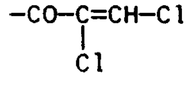 ,

$-CO-CH=CCl_2$ ,

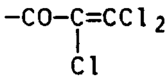 , 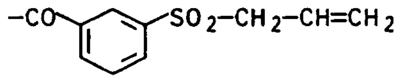 ,

$-CO-CH=CH-CH_2-Cl$ ,

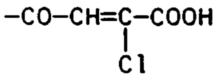 , 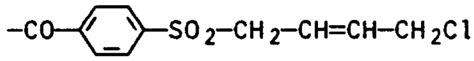 ,

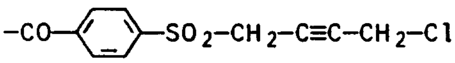 , 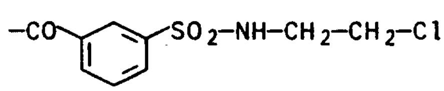 ,

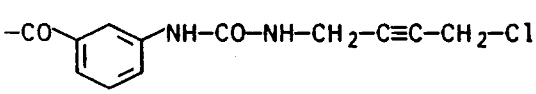 , 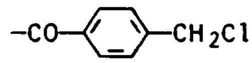 ,

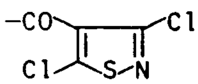 , 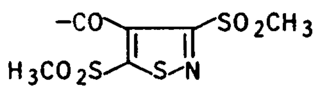 , 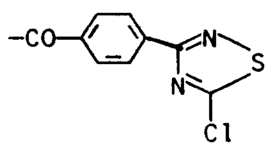 ,

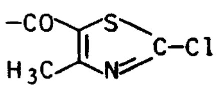 , 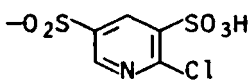 , 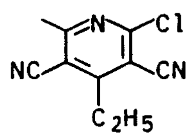 ,

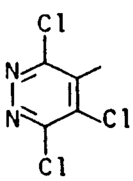 , 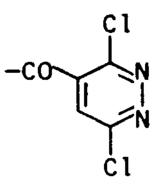 , 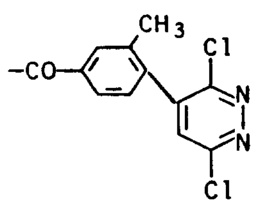 , 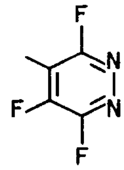 ,

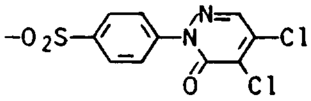 , 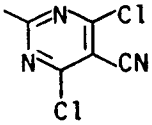 , 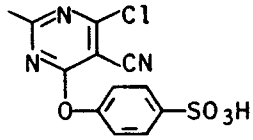 ,

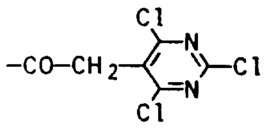 , 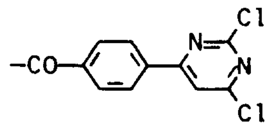 , 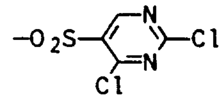 ,

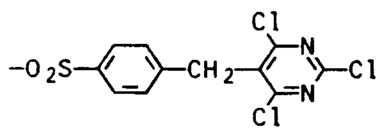 , 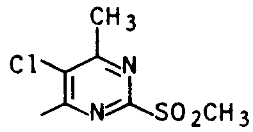 , 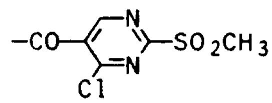 ,

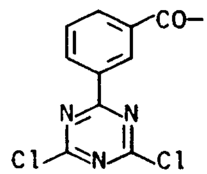 , 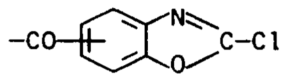 , 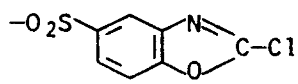 ,

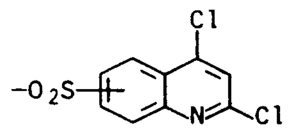 , 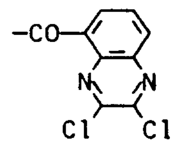 , 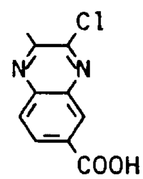 , 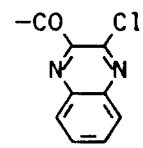 ,

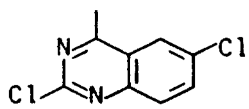 , 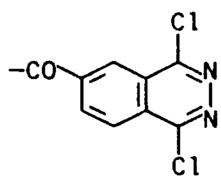 , 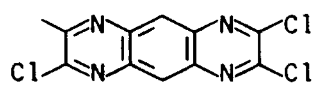 ,

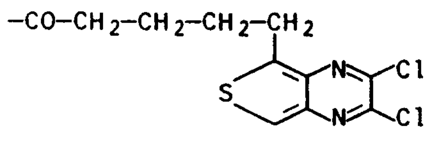 , 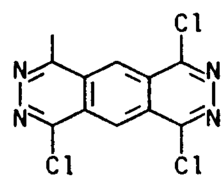 , 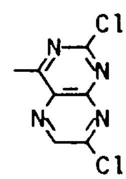 ,

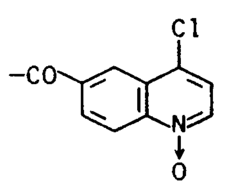 , 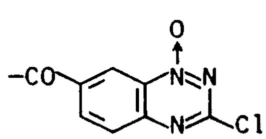

oder -CO-O-$R^6$ ,

worin

$R^4$ $C_1$-$C_4$-Alkoxy, Phenoxy oder einen Rest der Formel $NL^1L^2$, wobei $L^1$ und $L^2$ gleich oder verschieden sind und unabhängig voneinander jeweils für $C_1$-$C_4$-Alkyl, das gegebenenfalls durch Hydroxy, Hydroxysulfonyl oder Sulfato substituiert ist, oder gegebenenfalls substituiertes Phenyl oder $L^1$ und $L^2$ zusammen mit dem sie verbindenden Stickstoffatom für einen 5- oder 6-gliedrigen gesättigten heterocyclischen Rest, der gegebenenfalls noch weitere Heteroatome aufweisen kann, oder $L^1$ auch für Wasserstoff stehen,

$R^5$ Fluor, Chlor, Brom, $C_1$-$C_4$-Alkylsulfonyl, Phenylsulfonyl oder einen Rest der Formel

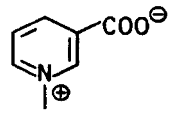

,

und

$R^6$ einen Rest der Formel $-OCH_2CCl_3$, $-OCH_2-CBr=CH_2$, $-OCH_2-CCl=CHCl$, $-OCH_2-C{\equiv}CH$, $-OC_2H_4-N^{\oplus}(CH_3)_3Cl^{\ominus}$ oder $-SCH_2-COOH$

bedeuten und Y die obengenannte Bedeutung besitzt.

Wenn im Rest $R^4$ substituierte Phenylreste auftreten, so können dabei z.B. $C_1$-$C_4$-Alkyl, $C_1$-$C_4$-Halogenalkyl, $C_1$-$C_4$-Alkoxy, Amino, $C_1$-$C_4$-Mono- oder Dialkylamino, Nitro, Formyl, Cyano, Carboxyl oder Hydroxysulfonyl als Substituenten in Betracht kommen.

Reste $R^4$ sind z.B. Methoxy, Ethoxy, Propoxy, Isopropoxy, Butoxy, Isobutoxy, sec-Butoxy, Mono- oder Dimethylamino, Mono- oder Diethylamino, Mono- oder Dipropylamino, Mono- oder Diisopropylamino, Mono- oder Dibutylamino, N-Methyl-N-ethylamino, N-(2-Hydroxyethyl)amino, N-(2-Hydroxysulfonylethyl)amino, N-(2-Sulfatoethyl)amino, Mono- oder Diphenylamino, N-Methyl-N-phenylamino, N-Ethyl-N-phenylamino, N-Propyl-N-phenylamino, N-Isopropyl-N-phenylamino, N-Butyl-N-phenylamino, 2- oder 4-Methylphenylamino, N-Methyl-N-(2- oder 4-methylphenyl)amino, N-Ethyl-N-(2- oder 4-methylphenyl)amino, 2- oder 4-Chlormethylphenylamino, N-Methyl-N-(2-oder 4-chlormethylphenyl)amino, N-Ethyl-N-(2- oder 4-chlormethylphenyl)-amino, 2- oder 4-Trifluormethylphenylamino, N-Methyl-N-(2- oder 4-trifluormethylphenyl)amino, N-Ethyl-N-(2- oder 4-trifluormethylphenyl)amino, 2-Methoxyphenylamino, N-Methyl-N-(2-methoxyphenyl)amino, N-Ethyl-N-(2-methoxyphenyl)amino, 2-Aminophenylamino, N-Methyl-N-(2-aminophenyl)amino, N-Ethyl-N-(2-aminophenyl)amino, 2-Methylaminophenylamino, N-Methyl-N-(2-methylaminophenyl)amino, N-Ethyl-N-(2-methylaminophenyl)amino, 2-Dimethylaminophenylamino, N-Methyl-N-(2-dimethylaminophenyl)amino, N-Ethyl-N-(2-dimethylaminophenyl)amino, 3-Nitrophenylamino, N-Methyl-N-(3-nitrophenyl)-amino, N-Ethyl-N-(3-nitrophenyl)amino, 3-Cyanophenylamino, N-Methyl-N-(3-cyanophenyl)amino, N-Ethyl-N-(3-cyanophenylamino), 3-Formylphenylamino, N-Methyl-N-(3-formylphenyl)amino, N-Ethyl-N-(3-formylphenyl)amino, 3-Carboxylphenylamino, N-Methyl-N-(3-carboxylphenyl)amino, N-Ethyl-N-(3-carboxylphenyl)amino, 3-Hydroxysulfonylphenylamino, N-Methyl-N-(3-hydroxysulfonylphenyl)amino, N-Ethyl-N-(3-hydroxysulfonylphenyl)amino, Pyrrolidino, Piperidino, Morpholino, Piperazino oder N-($C_1$-$C_4$-Alkyl)-piperazino.

Reste $R^5$ sind z.B. Methylsulfonyl, Ethylsulfonyl, Propylsulfonyl, Isopropylsulfonyl oder Butylsulfonyl.

Bevorzugt sind Reaktivfarbstoffe der Formel I, in der

n null,

$R^1$, $R^2$ und $R^3$ jeweils Wasserstoff,

A $C_2$-$C_4$-Alkylen, das gegebenenfalls durch ein Sauerstoffatom unterbrochen ist, und

$D^1$ Phenyl oder Naphthyl, wobei diese Reste durch Hydroxysulfonyl ein-bis dreifach substituiert sind, bedeuten.

Bevorzugt sind weiterhin Reaktivfarbstoffe der Formel I, in der Z einen Rest aus der Pyrazin-, Pyrimidin-, Chinoxalin-, Triazin-, Vinylsulfonyl-oder Acryloylreihe bedeutet.

Wenn n 1 bedeutet oder wenn $D^1$ eine andere Bedeutung als Dihydroxysulfonyl oder Trihydroxysulfonylnaphthyl besitzt, sind insbesondere Reaktivfarbstoffe der Formel I hervorzuheben, in der Z für den Rest der Formel

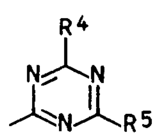

steht, worin $R^4$ und $R^5$ jeweils die obengenannte Bedeutung besitzt. Insbesondere sind dabei folgende Farbstoffe zu nennen, in denen $R^4$ einen Rest der Formel $NL^1L^2$, wobei $L^1$ für $C_1$-$C_4$-Alkyl und $L^2$ für gegebenenfalls substituiertes Phenyl, insbesondere unsubstituiertes Phenyl stehen, und $R^5$ Fluor oder Chlor bedeuten.

Insbesondere bevorzugt sind Reaktivfarbstoffe der Formel I, in der $D^1$ Dihydroxysulfonylphenyl oder Trihydroxysulfonylnaphthyl bedeutet.

Die neuen Reaktivfarbstoffe der Formel I (mit n = 0) können in vorteilhafter Weise erhalten werden, wenn man auf an sich bekanntem Weg z.B. ein Amin der Formel II

$D^1\text{-}NH_2$ (II),

in der $D^1$ die obengenannte Bedeutung besitzt, diazotiert und mit einem Phenylendiamin der Formel III

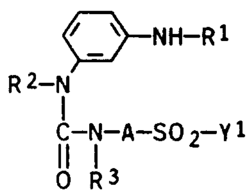

(III),

in der $R^1$, $R^2$, $R^3$ und A jeweils die obengenannte Bedeutung besitzen und $Y^1$ für 2-Hydroxyethyl oder den Rest Y steht, kuppelt.

Der resultierende Azofarbstoff der Formel IV

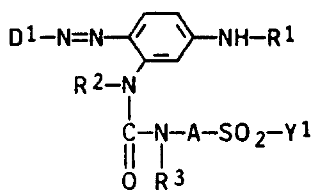

(IV),

in der $D^1$, $R^1$, $R^2$, $R^3$, A und $Y^1$ jeweils die obengenannte Bedeutung besitzen, kann dann in bekannter Weise mit einer Verbindung der Formel V

Hal-Z (V),

in der Z die obengenannte Bedeutung besitzt und Hal Fluor oder Chlor bedeutet, umgesetzt werden.

Die neuen Reaktivfarbstoffe der Formel I, in der n 1 bedeutet, kann man z.B. herstellen, indem man einen Azofarbstoff der Formel IVa

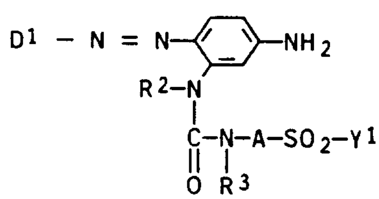

(IVa),

in der $D^1$, $R^2$, $R^3$, A und $Y^1$ jeweils die obengenannte Bedeutung besitzen, der, wie vorstehend beschrieben, erhalten werden kann, diazotiert und mit einem Aminderivat der Formel VI

$H\text{-}D^2\text{-}NH\text{-}R^1$ (VI),

in der $R^1$ und $D^2$ jeweils die obengenannte Bedeutung besitzen, kuppelt und wie oben beschrieben mit der Verbindung der Formel V umsetzt.

Die Herstellung der Phenylendiamine der Formel III erfolgt nach an sich bekannter Weise, wie sie z.B. in der älteren Patentanmeldung EP-A-437 669 oder in der älteren deutschen Patentanmeldung P 41 07 692.3 beschrieben ist.

Für den Fall, daß $Y^1$ 2-Hydroxyethyl bedeutet, wird schließlich, ebenfalls auf an sich bekanntem Wege, z.B. durch Veresterung mit Schwefelsäure, diese Gruppierung in den Rest Y übergeführt.

Die neuen Reaktivfarbstoffe der Formel I eignen sich in vorteilhafter Weise zum Färben oder Bedrucken von Hydroxygruppen oder Stickstoffatome aufweisenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Baumwolle. Die erfindungsgemäßen Reaktivfarbstoffe können auch für den Ätzdruck verwendet werden, da sie alkalisch ätzbar sind.

Die folgenden Beispiele sollen die Erfindung näher erläutern.

Die darin als Kupplungskomponenten verwendeten Phenylendiamine sind in der älteren Patentanmeldung EP-A-437 669 unter den Beispielen 5 bis 8 sowie in der älteren deutschen Patentanmeldung P 41 07 692.3 unter den Beispielen Z4 bis Z9 beschrieben.

Beispiel 1

101,2 g (0,4 mol) Anilin-2,4-disulfonsäure wurden in 400 ml Wasser salzsauer diazotiert und zu einer Suspension aus 132 g (0,4 mol) der Verbindung der Formel

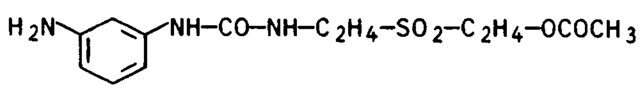

in 500 ml Wasser gegeben. Die Kupplungsreaktion wurde bei 0 bis 5 °C und einem pH-Wert von 3 durch Zugabe von 2N Kaliumhydrogencarbonat-Lösung durchgeführt. Die oben beschriebene Reaktionslösung wurde mit 88 g (0,4 mol) Tetrachlorpyrimidin bei 30 bis 45 °C und einem pH-Wert von 6 bis 7 kondensiert. Anschließend wurde die Lösung klärfiltriert und der Reaktivfarbstoff durch Aussalzen isoliert. Er entspricht der Formel (freie Säure)

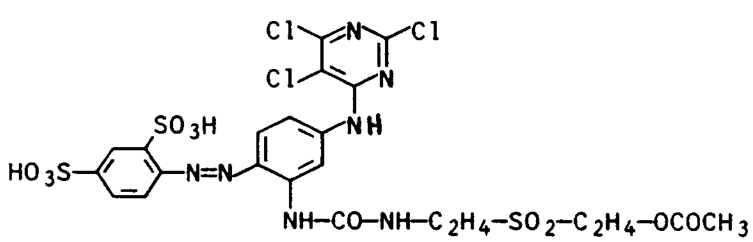

und färbt Baumwolle in gelbem Ton mit guten Licht- und Naßechtheiten.

In analoger Weise können die in Tabelle 1 beschriebenen Farbstoffe der Formel

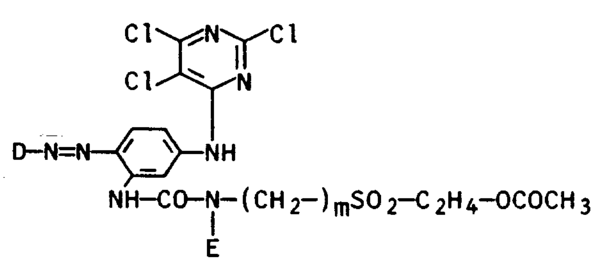

erhalten werden.

Tabelle 1

| Bsp. Nr. | D | E | m | Farbton auf Baumwolle |
|---|---|---|---|---|
| 2 | 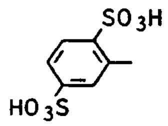 | H | 2 | gelb |
| 3 | 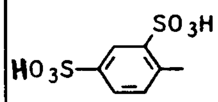 | H | 3 | gelb |
| 4 | 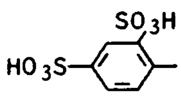 | $CH_3$ | 2 | gelb |
| 5 | 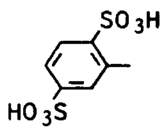 | H | 3 | gelb |
| 6 | 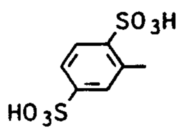 | $CH_3$ | 2 | gelb |
| 7 | 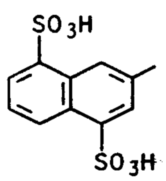 | H | 2 | gelb |
| 8 | 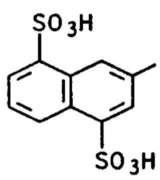 | H | 3 | gelb |

Tabelle 1 (Forts.)

| Bsp. Nr. | D | E | m | Farbton auf Baumwolle |
|---|---|---|---|---|
| 9 | 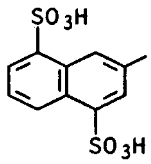 | $CH_3$ | 2 | gelb |
| 10 | 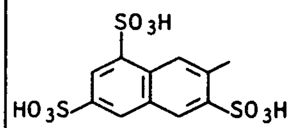 | H | 2 | goldgelb |
| 11 | 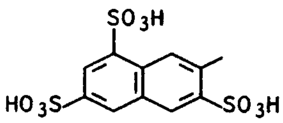 | H | 3 | goldgelb |
| 12 | 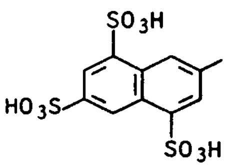 | $CH_3$ | 2 | goldgelb |
| 13 | 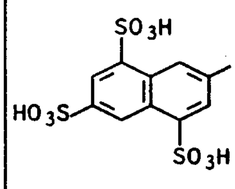 | $CH_3$ | 2 | goldgelb |
| 14 | 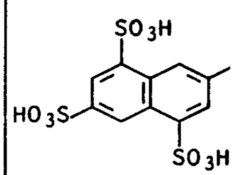 | H | 3 | goldgelb |
| 15 | 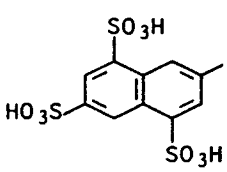 | $CH_3$ | 2 | goldgelb |

Tabelle 1 (Forts.)

| Bsp. Nr. | D | E | m | Farbton auf Baumwolle |
|---|---|---|---|---|
| 16 | 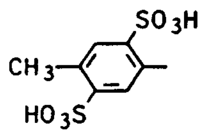 | H | 2 | gelb |
| 17 | 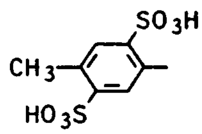 | H | 3 | gelb |
| 18 | 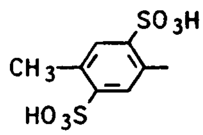 | $CH_3$ | 2 | gelb |
| 19 | 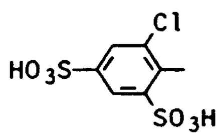 | H | 2 | gelb |
| 20 | 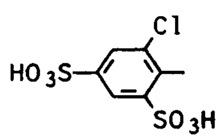 | H | 3 | gelb |
| 21 | 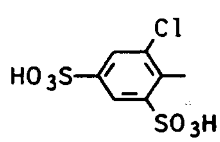 | $CH_3$ | 2 | gelb |

Beispiel 22

101,2 g (0,4 mol) Anilin-2,5-disulfonsäure wurden in 400 ml Wasser salzsauer diazotiert und zu einer Suspension aus 132 g (0,4 mol) der Verbindung der Formel

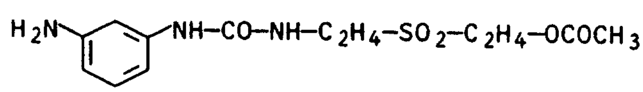

in 500 ml Wasser gegeben. Die Kupplungsreaktion wurde bei 0 bis 5 ° C und einem pH-Wert von 3 mittels 2N Kaliumhydrogencarbonat-Lösung durchgeführt. Die oben beschriebene Reaktionslösung wurde mit 67,4 g (0,4 mol) 2,4,6-Trifluor-5-chlorpyrimidin bei 0 bis 5 ° C und einem pH-Wert von 6 bis 7 kondensiert. Die Lösung wurde im Anschluß klärfiltriert und der Reaktivfarbstoff durch Sprühtrocknen isoliert. Er entspricht der Formel (freie Säure)

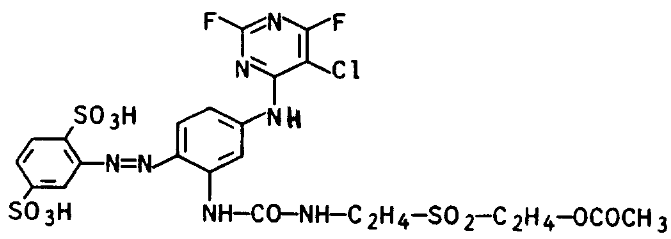

und färbt Baumwolle in gelbem Ton mit guten Licht- und Naßechtheiten.

In analoger Weise können die in Tabelle 2 beschriebenen Farbstoffe der Formel

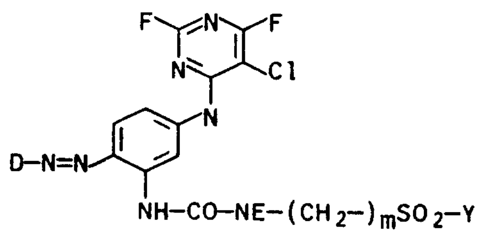

erhalten werden.

Tabelle 2

| Bsp. Nr. | D | E | m | Y | Farbton auf Baumwolle |
|---|---|---|---|---|---|
| 23 | 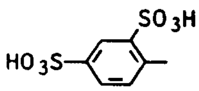 | H | 2 | $C_2H_4OCOCH_3$ | gelb |
| 24 | 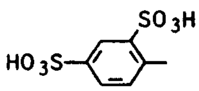 | $CH_3$ | 2 | $C_2H_4OCOCH_3$ | gelb |
| 25 | 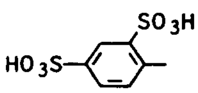 | H | 3 | $C_2H_4OCOCH_3$ | gelb |
| 26 | 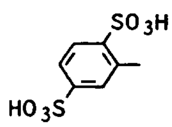 | H | 3 | $C_2H_4OCOCH_3$ | gelb |
| 27 | 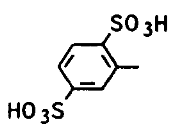 | $CH_3$ | 2 | $C_2H_4OCOCH_3$ | gelb |
| 28 | 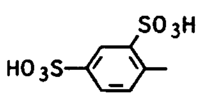 | H | 2 | $CH{=}CH_2$ | gelb |
| 29 | 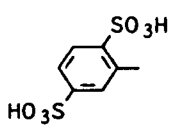 | H | 2 | $CH{=}CH_2$ | gelb |
| 30 | 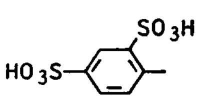 | H | 2 | $C_2H_4Cl$ | gelb |

Tabelle 2 (Forts.)

| Bsp. Nr. | D | E | m | Y | Farbton auf Baumwolle |
|---|---|---|---|---|---|
| 31 | 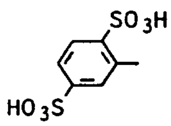 | H | 2 | $C_2H_4Cl$ | gelb |
| 32 | 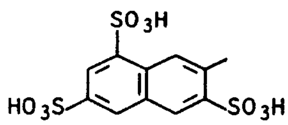 | H | 2 | $C_2H_4OCOCH_3$ | gelb |
| 33 | 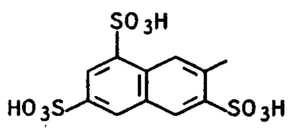 | H | 2 | $CH{=}CH_2$ | gelb |
| 34 | 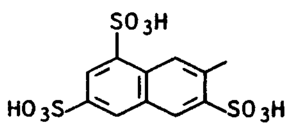 | H | 2 | $C_2H_4Cl$ | gelb |
| 35 | 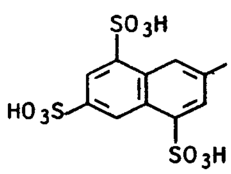 | H | 2 | $C_2H_4OCOCH_3$ | gelb |
| 36 | 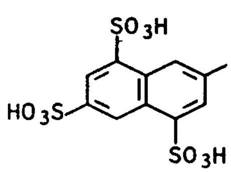 | H | 2 | $C_2H_4Cl$ | gelb |
| 37 | 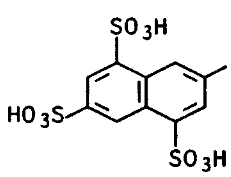 | H | 2 | $CH{=}CH_2$ | gelb |

Tabelle 2 (Forts.)

| Bsp. Nr. | D | E | m | Y | Farbton auf Baumwolle |
|---|---|---|---|---|---|
| 38 | 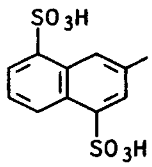 | H | 2 | $C_2H_4OCOCH_3$ | gelb |
| 39 | 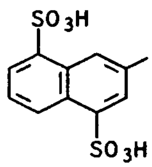 | H | 2 | $CH=CH_2$ | gelb |
| 40 | 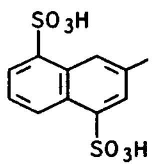 | H | 2 | $C_2H_4Cl$ | gelb |
| 41 | 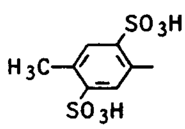 | H | 2 | $C_2H_4OCOCH_3$ | gelb |
| 42 | 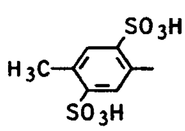 | H | 2 | $CH=CH$ | gelb |
| 43 | 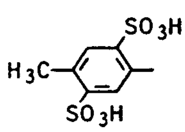 | H | 2 | $C_2H_4Cl$ | gelb |
| 44 | 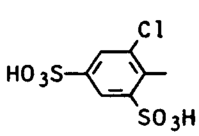 | H | 2 | $C_2H_4OCOCH_3$ | gelb |

Tabelle 2 (Forts.)

| Bsp. Nr. | D | E | m | Y | Farbton auf Baumwolle |
|---|---|---|---|---|---|
| 45 | 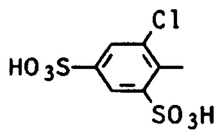 | H | 2 | CH=CH | gelb |
| 46 | 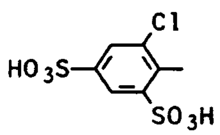 | H | 2 | $C_2H_4Cl$ | gelb |

Beispiel 47

0,5 mol der in Beispiel 1 beschriebenen Kupplungslösung wurden mit 91,8 g (0,5 mol) 2,4,6-Trichlorpyrimidin bei 40 bis 60 °C und einem pH-Wert von 6 bis 7 kondensiert. Die entstandene Reaktionslösung wurde klärfiltriert und der Reaktivfarbstoff durch Aussalzen isoliert. Er entspricht der Formel (freie Säure)

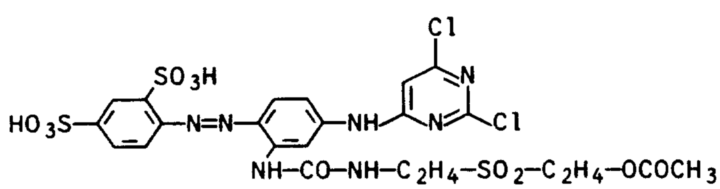

und färbt Baumwolle in gelbem Ton.

In analoger Weise wurden die in Tabelle 3 aufgeführten Farbstoffe der Formel

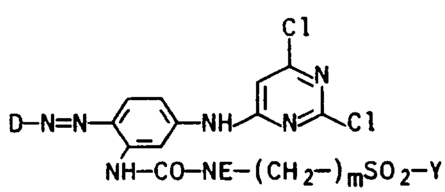

erhalten.

Tabelle 3

| Bsp. Nr. | D | E | m | Y | Farbton auf Baumwolle |
|---|---|---|---|---|---|
| 48 | 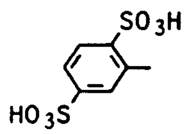 | H | 2 | $C_2H_4OCOCH_3$ | gelb |
| 49 | 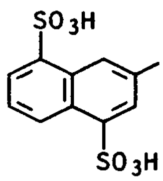 | H | 2 | $C_2H_4OCOCH_3$ | gelb |
| 50 | 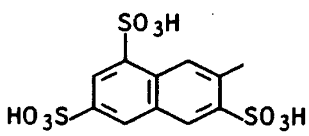 | $CH_3$ | 2 | $C_2H_4Cl$ | gelb |
| 51 | 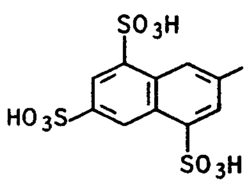 | H | 3 | $C_2H_4OCOCH_3$ | gelb |
| 52 | 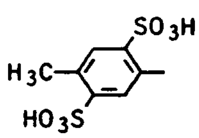 | H | 2 | $CH{=}CH_2$ | gelb |
| 53 | 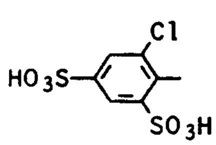 | $CH_3$ | 2 | $C_2H_4Cl$ | gelb |

Beispiel 54

191,5 g (0,5 mol) 2-Aminonaphthalin-3,6,8-trisulfonsäure wurden in 500 ml Wasser salzsauer diazotiert und zu einer Suspension aus 164,5 g (0,5 mol) der Verbindung der Formel

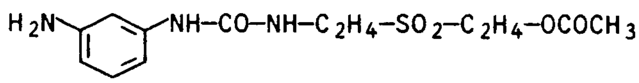

in 600 ml Wasser gegeben. Die Kupplungsreaktion wurde bei 0 bis 5 ° C und einem pH-Wert von 2 bis 3 durchgeführt. Die erhaltene Reaktionslösung wurde mit 127,8 g (0,5 mol) 4,5-Dichlor-1-(2-chlorcarbonylethyl)pyridaz-6-on bei 20 bis 30 ° C und einem pH-Wert von 6 bis 7 kondensiert. Die resultierende Farbstofflösung wurde klärfiltriert und der Reaktivfarbstoff der Formel (freie Säure)

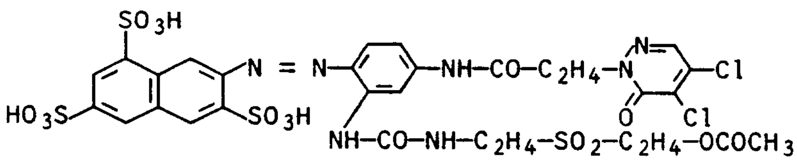

durch Sprühtrocknen isoliert. Er färbt Baumwolle in gelbem Ton mit guten Licht- und Naßechtheiten.

In analoger Weise können die in Tabelle 4 aufgeführten Farbstoffe der Formel

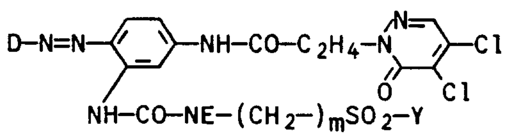

erhalten werden.

Tabelle 4

| Bsp. Nr. | D | E | m | Y | Farbton auf Baumwolle |
|---|---|---|---|---|---|
| 55 | 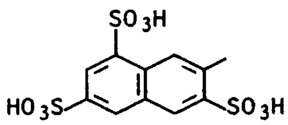 | $CH_3$ | 2 | $C_2H_4OCOCH_3$ | gelb |
| 56 | 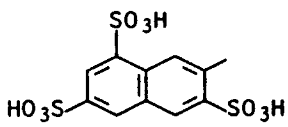 | H | 3 | $C_2H_4OCOCH_3$ | gelb |
| 57 | 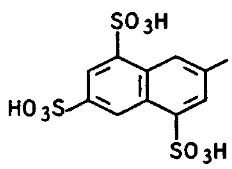 | H | 2 | $C_2H_4OCOCH_3$ | gelb |
| 58 | 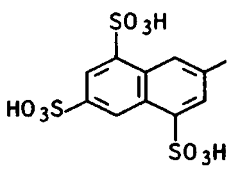 | H | 2 | $C_2H_4Cl$ | gelb |
| 59 | 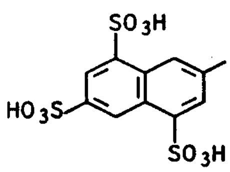 | H | 2 | $CH{=}CH_2$ | gelb |
| 60 | 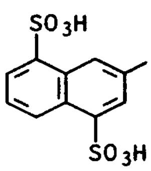 | H | 2 | $C_2H_4OCOCH_3$ | gelb |
| 61 | 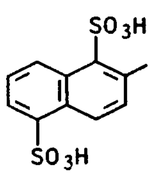 | H | 2 | $C_2H_4OCOCH_3$ | gelb |

Tabelle 4 (Forts.)

| Bsp. Nr. | D | E | m | Y | Farbton auf Baumwolle |
|---|---|---|---|---|---|
| 62 | 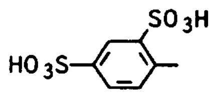 | H | 2 | $C_2H_4OCOCH_3$ | gelb |
| 63 | 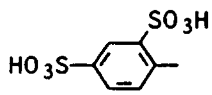 | H | 2 | $C_2H_4Cl$ | gelb |
| 64 | 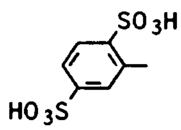 | H | 2 | $C_2H_4OCOCH_3$ | gelb |
| 65 | 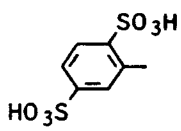 | H | 2 | $CH{=}CH_2$ | gelb |
| 66 | 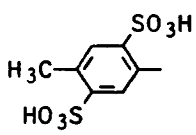 | H | 2 | $C_2H_4OCOCH_3$ | gelb |
| 67 | 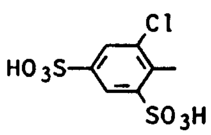 | H | 2 | $C_2H_4OCOCH_3$ | gelb |
| 68 | 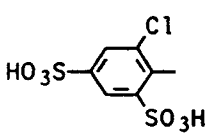 | H | 3 | $C_2H_4OCOCH_3$ | gelb |
| 69 | 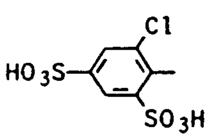 | $CH_3$ | 2 | $C_2H_4OCOCH_3$ | gelb |

Beispiel 70

126,5 g (0,5 mol) Anilin-2,4-disulfonsäure wurden in 500 ml Wasser salzsauer diazotiert und zu einer Suspension aus 164,5 g (0,5 mol) der Verbindung der Formel

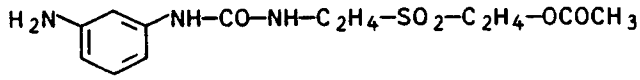

in 500 ml Wasser gegeben. Die Kupplungsreaktion wurde bei 0 bis 5 °C und einem pH-Wert von 3 durchgeführt. Diese Reaktionslösung wurde mit 130,8 g (0,5 mol) 2,3-Dichlorchinoxalin-6-carbonsäurechlorid bei 20 bis 35 °C und einem pH-Wert von 6 bis 7 kondensiert. Die resultierende Farbstofflösung wurde klärfiltriert und der Reaktivfarbstoff der Formel (freie Säure)

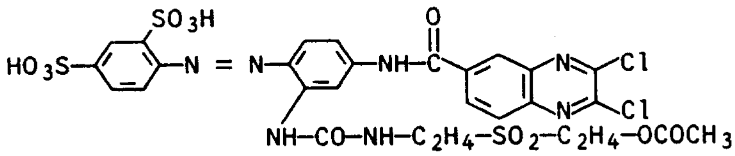

durch Sprühtrocknen isoliert. Er färbt Baumwolle in gelbem Ton.

In analoger Weise können die in Tabelle 5 aufgeführten Farbstoffe der Formel

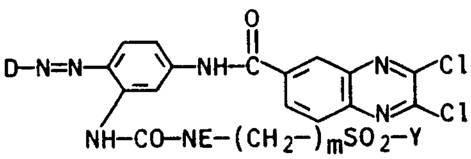

erhalten werden.

Tabelle 5

| Bsp. Nr. | D | E | m | Y | Farbton auf Baumwolle |
|---|---|---|---|---|---|
| 71 | 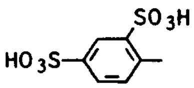 | H | 2 | $CH{=}CH_2$ | gelb |
| 72 | 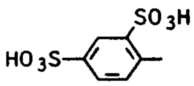 | $CH_3$ | 2 | $C_2H_4OCOCH_3$ | gelb |
| 73 | 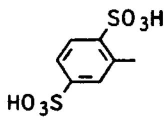 | H | 2 | $C_2H_4OCOCH_3$ | gelb |
| 74 | 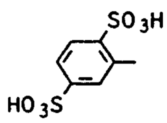 | H | 2 | $C_2H_4Cl$ | gelb |
| 75 | 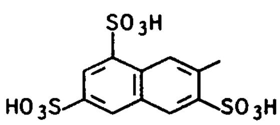 | H | 2 | $C_2H_4OCOCH_3$ | gelb |
| 76 | 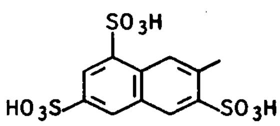 | $CH_3$ | 2 | $C_2H_4OCOCH_3$ | gelb |
| 77 | 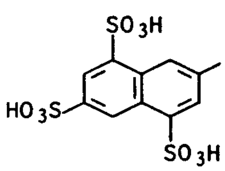 | H | 2 | $CH{=}CH_2$ | gelb |
| 78 | 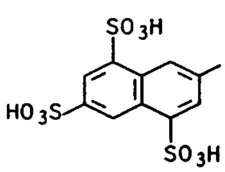 | H | 3 | $C_2H_4OCOCH_3$ | gelb |

Tabelle 5 (Forts.)

| Bsp. Nr. | D | E | m | Y | Farbton auf Baumwolle |
|---|---|---|---|---|---|
| 79 | 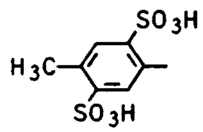 | H | 2 | $C_2H_4OCOCH_3$ | gelb |
| 80 | 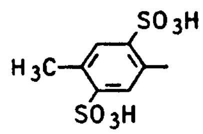 | H | 2 | $C_2H_4Cl$ | gelb |
| 81 | 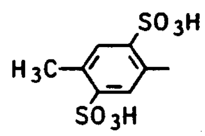 | H | 2 | $CH{=}CH_2$ | gelb |
| 82 | 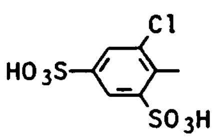 | H | 2 | $C_2H_4OCOCH_3$ | gelb |
| 83 | 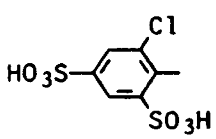 | $CH_3$ | 2 | $C_2H_4OCOCH_3$ | gelb |

Beispiel 84

0,5 mol der in Beispiel 1 beschriebenen Kupplungslösung wurden mit 133,5 g (0,5 mol) 4-(2-Chlorethylsulfonyl)benzoylchlorid bei 0 bis 5 °C und einem pH-Wert von 5 bis 6 kondensiert. Die Reaktionslösung wurde anschließend klärfiltriert und der Farbstoff durch Aussalzen isoliert. Er entspricht der Formel (freie Säure)

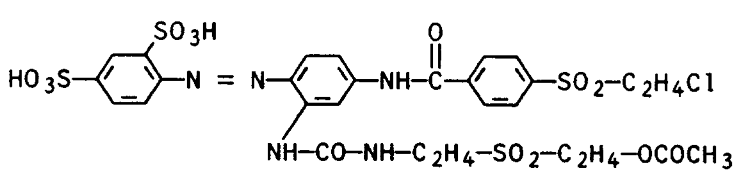

und färbt Baumwolle in gelbem Ton.

In analoger Weise können die in Tabelle 6 aufgeführten Farbstoffe der Formel

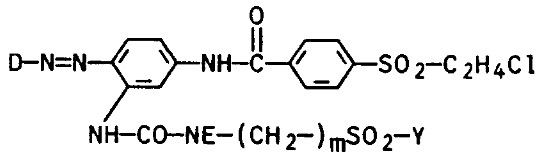

erhalten werden.

Tabelle 6

| Bsp. Nr. | D | E | m | Y | Farbton auf Baumwolle |
|---|---|---|---|---|---|
| 85 | 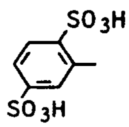 | H | 2 | $C_2H_4OCOCH_3$ | gelb |
| 86 | 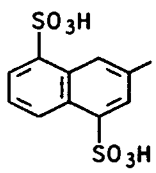 | H | 2 | $C_2H_4OCOCH_3$ | gelb |
| 87 | 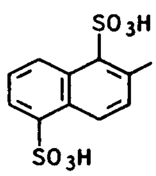 | H | 2 | $C_2H_4OCOCH_3$ | gelb |
| 88 | 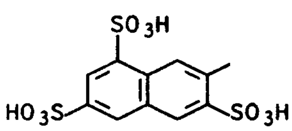 | H | 2 | $C_2H_4OCOCH_3$ | gelb |
| 89 | 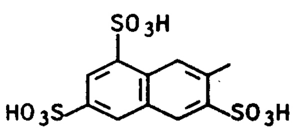 | $CH_3$ | 2 | $C_2H_4OCOCH_3$ | gelb |
| 90 | 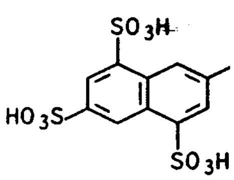 | H | 2 | $CH{=}CH_2$ | gelb |
| 91 | 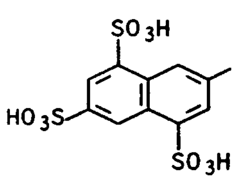 | H | 2 | $C_2H_4OCOCH_3$ | gelb |

Tabelle 6 (Forts.)

| Bsp. Nr. | D | E | m | Y | Farbton auf Baumwolle |
|---|---|---|---|---|---|
| 92 | 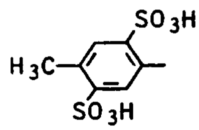 | H | 2 | $C_2H_4OCOCH_3$ | gelb |
| 93 | 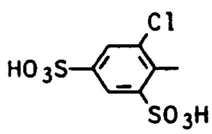 | H | 2 | $C_2H_4OCOCH_3$ | gelb |

Beispiel 94

126,5 g (0,5 mol) Anilin-2,4-disulfonsäure wurden in 500 ml Wasser salzsauer diazotiert und zu einer Lösung aus 183,5 g (0,5 mol) der Verbindung der Formel

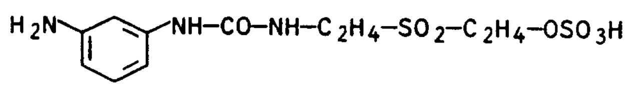

in 500 ml Wasser gegeben. Die Kupplungsreaktion wurde bei 0 bis 5 °C und einem pH-Wert von 3 durch Zugabe von 2N Natronlauge durchgeführt. Anschließend wurde die Kupplungslösung mit 84,3 g (0,5 mol) 2,4,6-Trifluor-5-chlorpyrimidinversetzt und zur Kondensation die Temperatur zwischen 0 und 5 °C und der pH-Wert zwischen 6 und 7 durch Zugabe von 2N Natronlauge gehalten. Die entstandene Farbstofflösung wurde klärfiltriert und der Reaktivfarbstoff der Formel (freie Säure)

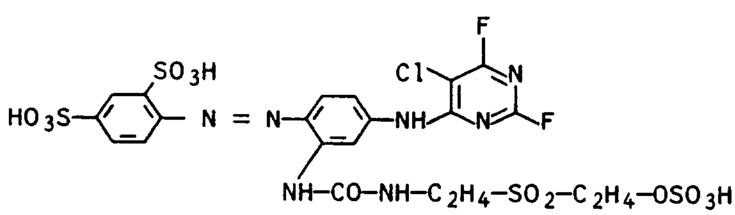

durch Sprühtrocknen isoliert. Er färbt Baumwolle in gelbem Ton.

In analoger Weise können die in Tabelle 7 aufgeführten Farbstoffe der Formel

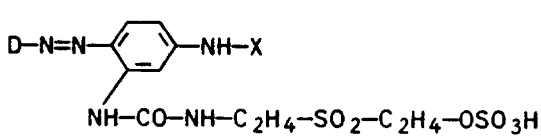

erhalten werden.

Tabelle 7

| Bsp. Nr. | D | X | Farbton auf Baumwolle |
|---|---|---|---|
| 95 | 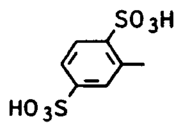 | 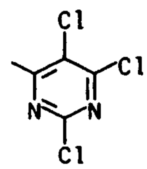 | gelb |
| 96 | 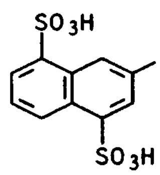 | 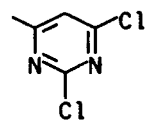 | gelb |
| 97 | 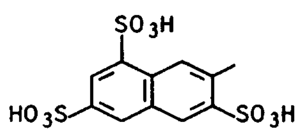 | 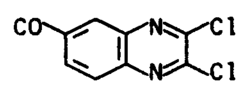 | gelb |
| 98 | 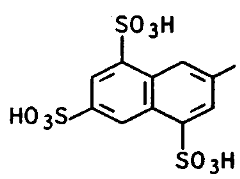 | 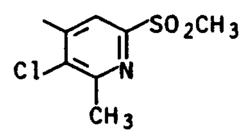 | gelb |
| 99 | 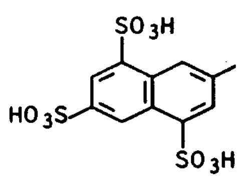 | 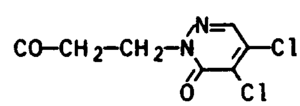 | gelb |
| 100 | 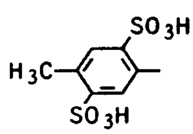 | 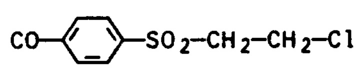 | gelb |
| 101 | 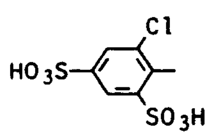 | $CO-CBr=CH_2$ | gelb |

Tabelle 7 (Forts.)

| Bsp. Nr. | D | X | Farbton auf Baumwolle |
|---|---|---|---|
| 102 | 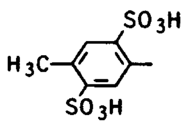 | 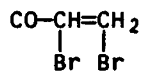 | gelb |
| 103 | 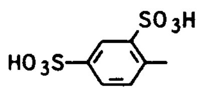 | $CO-CH_2-CH_2-Cl$ | gelb |
| 104 | 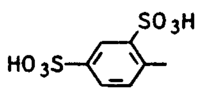 | 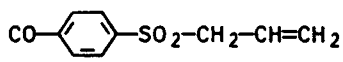 | gelb |
| 105 | 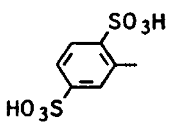 | 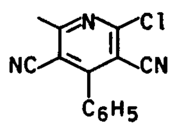 | gelb |
| 106 | 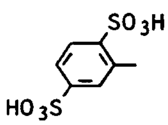 | 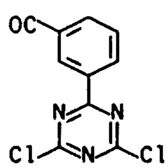 | gelb |
| 107 | 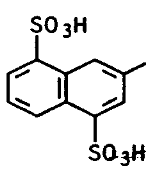 | 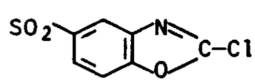 | gelb |
| 108 | 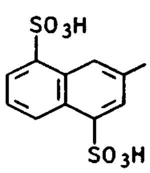 | 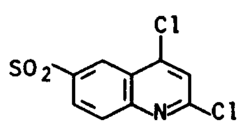 | gelb |
| 109 | 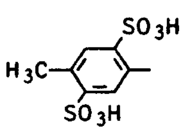 | 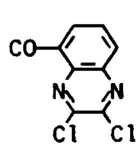 | gelb |

Tabelle 7 (Forts.)

| Bsp. Nr. | D | X | Farbton auf Baumwolle |
|---|---|---|---|
| 110 | 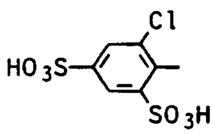 | 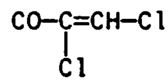 | gelb |

Beispiel 111

25,3 g (0,1 mol) Anilin-2,4-disulfonsäure wurden in 100 ml Wasser salzsauer diazotiert und mit einer Lösung aus 22,3 g (0,1 mol) 1-Aminonaphthalin-6-sulfonsäure in 100 ml Wasser versetzt. Die Kupplungsreaktion wurde bei 0 bis 5 °C und einem pH-Wert von 3,5 bis 4,0 mittels 2N Kaliumhydrogencarbonatlösung durchgeführt. Der entstandene Azokörper wurde erneut salzsauer diazotiert und mit einer Suspension aus 32,9 g (0,1 mol) der Verbindung der Formel

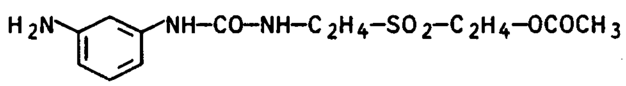

in 150 ml Wasser versetzt. Die zweite Kupplungsreaktion wurde bei 10 bis 15 °C und einem pH-Wert von 3 bis 4 durchgeführt. Die entstandene Lösung des Disazofarbstoffs wurde auf 0 bis 5 °C abgekühlt und bei dieser Temperatur mit 18,5 g (0,1 mol) Cyanurchlorid bei einem pH-Wert von 5,5 kondensiert. Anschließend wurde die Reaktionslösung klärfiltriert und mit 17,3 g (0,1 mol) Anilin-3-sulfonsäure bei 40 bis 45 °C und einem pH-Wert von 6 umgesetzt. Der resultierende Reaktivfarbstoff konnte durch Aussalzen mittels Kaliumchlorid isoliert werden. Er entspricht der Formel (freie Säure)

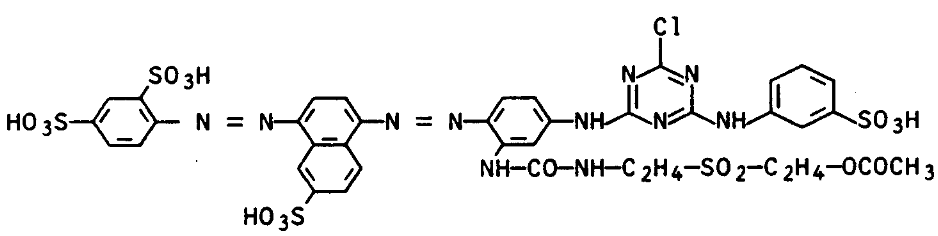

($\lambda_{max}$ = 480 nm)
und färbt Baumwolle in braunem Ton.

In analoger Weise können die in Tabelle 8 aufgeführten Farbstoffe der Formel

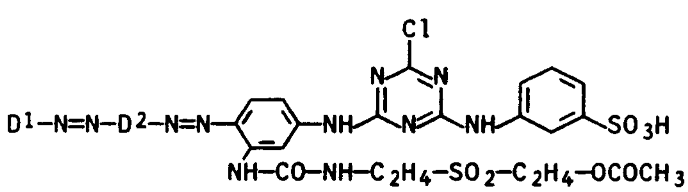

erhalten werden.

Tabelle 8

| Bsp. Nr. | D1 | D2 | $\lambda_{max}$ [nm] | Farbton auf Baumwolle |
|---|---|---|---|---|
| 112 | 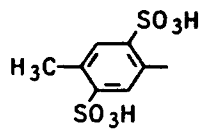 | 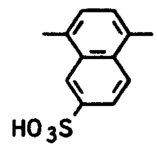 | 476 | braun |
| 113 | 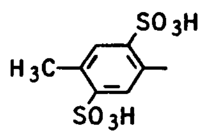 | 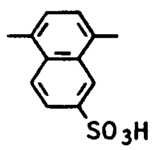 | 477 | braun |
| 114 | 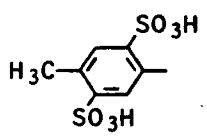 | 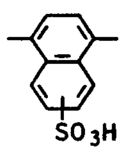 | 481 | braun |
| 115 | 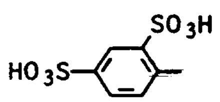 | 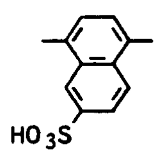 | 480 | braun |

Beispiel 116

26,7 g (0,1 mol) 4-Toluidin-2,5-disulfonsäure wurden in 100 ml Wasser salzsauer diazotiert und mit einer Suspension aus 32,9 g (0,1 mol) der Verbindung der Formel

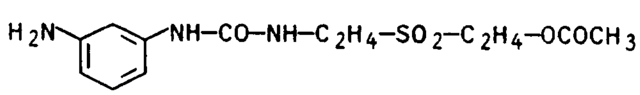

in 150 ml Wasser versetzt. Die Kupplungsreaktion wurde bei 0 bis 5 °C und einem pH-Wert von 3 bis 3,5 mittels 2N Kaliumhydrogencarbonat-Lösung durchgeführt. Der gebildete Azokörper wurde erneut salzsauer diazotiert und wiederum mit einer Suspension aus 32,9 g (0,1 mol) der obigen Kupplungskomponente in 150 ml Wasser umgesetzt. Die zweite Kupplungsreaktion wurde bei 0 bis 5 °C und einem pH-Wert von 3,5 bis 4 durchgeführt. Der entstandene Disazofarbstoff wurde anschließend mit 20,3 g (0,11 mol) Cyanurchlorid bei einem pH-Wert von 5,5 kondensiert. Mach beendeter Reaktion wurde das überschüssige Cyanurchlorid abfiltriert, das Filtrat mit 17,3 g (0,1 mol) Anilin-3-sulfonsäure versetzt, auf 40 bis 45 °C erwärmt und ein pH-Wert von 6 eingestellt. Der entstandene Reaktivfarbstoff wurde mit Kaliumchlorid ausgesalzen. Er entspricht der Formel (freie Säure)

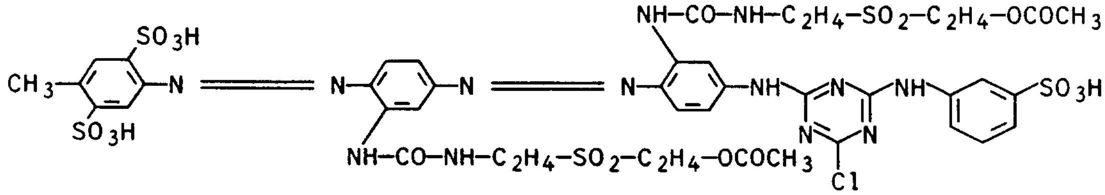

($\lambda_{max}$ = 452 nm)
und färbt Baumwolle in orangebraunem Ton.

In analoger Weise können die in Tabelle 9 aufgeführten Farbstoffe der Formel

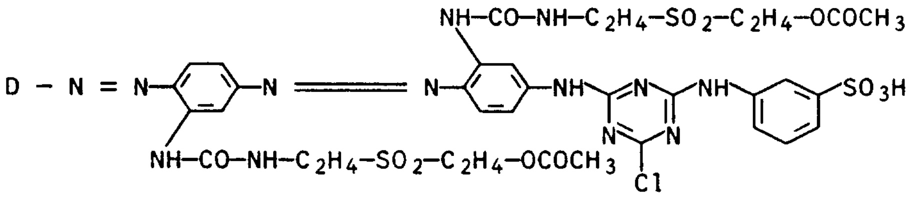

erhalten werden.

Tabelle 9

| Bsp. Nr. | D | Farbton auf Baumwolle |
|---|---|---|
| 117 | 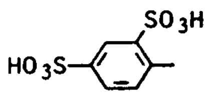 | orangebraun |
| 118 | 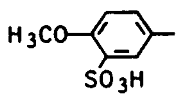 | braun |
| 119 | 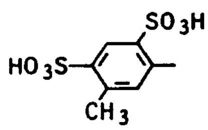 | braun |
| 120 | 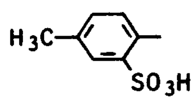 | braun |
| 121 | 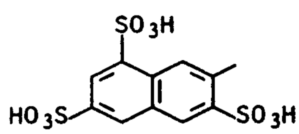 | braun |
| 122 | 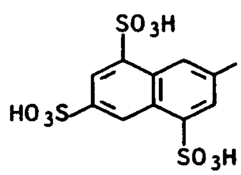 | braun |
| 123 | 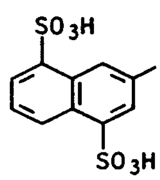 | braun |
| 124 | 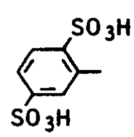 | orangebraun |

Beispiel 125

0,1 mol des in Beispiel 116 beschriebenen Monoazokörpers wurden bei 0 bis 5 ° C salzsauer diazotiert und mit einer Lösung aus 22,3 g (0,1 mol) 1-Aminonaphthalin-6-sulfonsäure in 100 ml Wasser versetzt. Die Kupplungsreaktion wurde bei einem pH-Wert von 3 bis 4 mittels 2N Kaliumhydrogencarbonat-Lösung durchgeführt. Der entstandene Disazokörper wurde zunächst mit 18,4 g (0,1 mol) Cyanurchlorid bei einem pH-Wert von 5,5 und anschließend mit 17,3 g (0,1 mol) Anilin-3-sulfonsäure bei 40 bis 45 ° C und einem pH-Wert von 6 kondensiert. Durch Aussalzen mit Kaliumchlorid wurde der Reaktivfarbstoff der Formel (freie Säure)

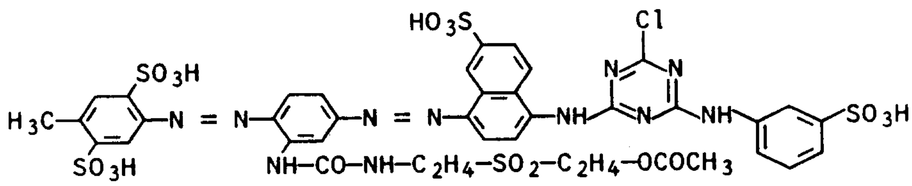

($\lambda_{max}$ = 437 nm)
erhalten. Er färbt Baumwolle in braunem Ton.

In analoger Weise können die in Tabelle 10 aufgeführten Farbstoffe der Formel

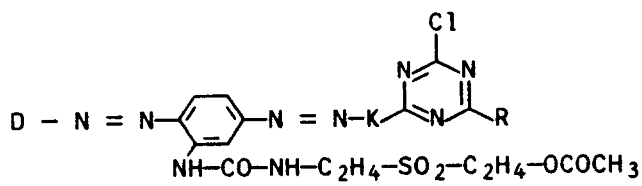

erhalten werden.

Tabelle 10

| Bsp. Nr. | D | K | R | Farbton auf Baumwolle |
|---|---|---|---|---|
| 126 | 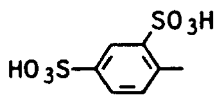 | 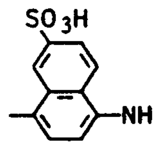 | 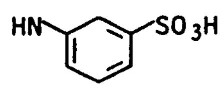 | braun |
| 127 | 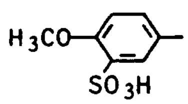 | 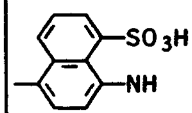 | 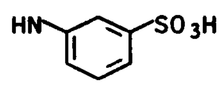 | braun |
| 128 | 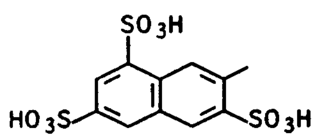 | 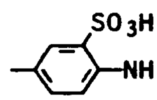 | 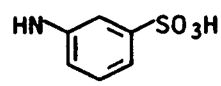 | braun |
| 129 | 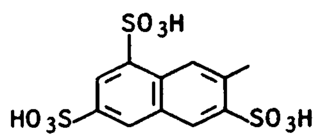 | 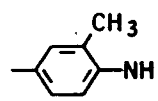 | 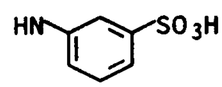 | braun |
| 130 | 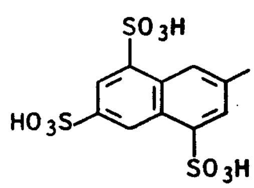 | 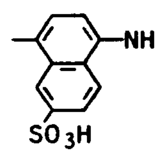 | 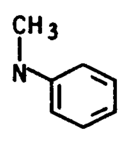 | braun |
| 131 | 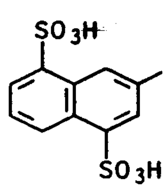 | 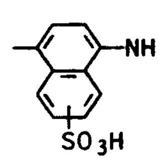 | 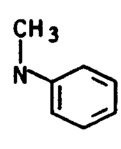 | braun |

Beispiel 132

0,1 mol der in Beispiel 111 beschriebenen Lösung des Disazofarbstoffs wurden bei 30 bis 45 °C mit 22 g (0,1 mol) Tetrachlorpyrimidin bei einem pH-Wert von 6 bis 7 kondensiert. Anschließend wurde die Lösung klärfiltriert und der Farbstoff durch Sprühtrocknen isoliert. Er entspricht der Formel (freie Säure)

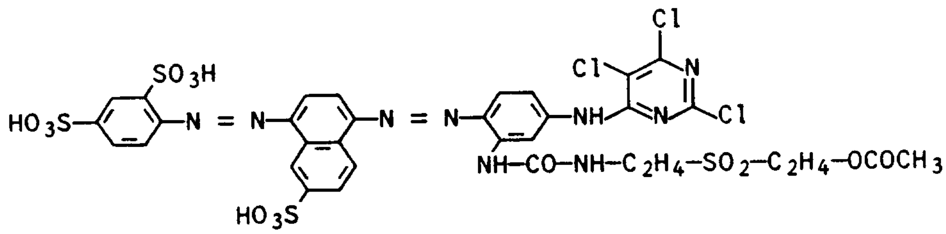

und färbt Baumwolle in braunem Ton.

In analoger Weise können die in Tabelle 11 aufgeführten Farbstoffe der Formel

$D^1$-N = N-$D^2$-N = N-K-NH-X

erhalten werden.

Tabelle 11

| Bsp. Nr. | $D^1$ | $D^2$ | K | X | Farbton auf Baumwolle |
|---|---|---|---|---|---|
| 132 | 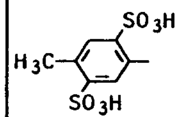 | 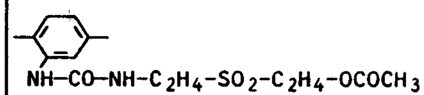 | 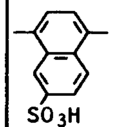 | 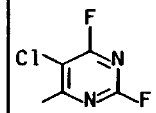 | braun |
| 133 | 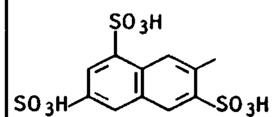 | 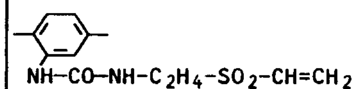 | 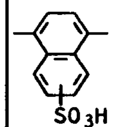 | 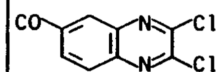 | braun |
| 134 | 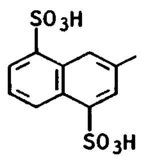 | 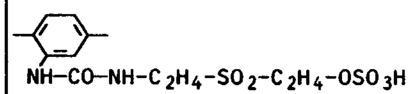 | 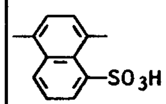 | 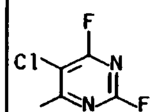 | braun |
| 135 | 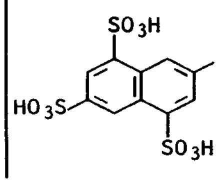 | 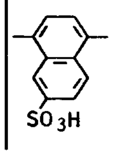 | 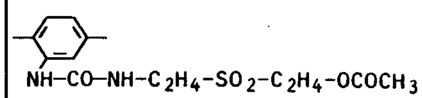 | 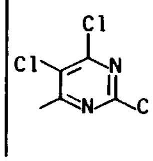 | braun |

Tabelle 11 (Forts.)

| Bsp. Nr. | $D^1$ | $D^2$ | K | X | Farbton auf Baumwolle |
|---|---|---|---|---|---|
| 136 | 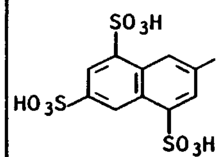 | 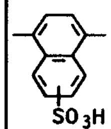 | 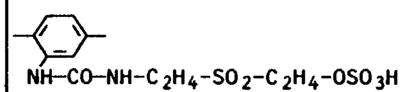 | 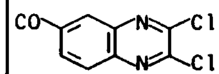 | braun |
| 137 | 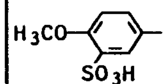 | 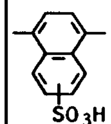 | 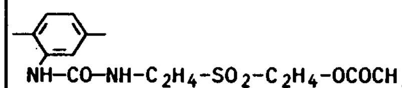 | 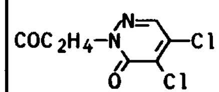 | braun |
| 138 | 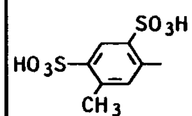 | 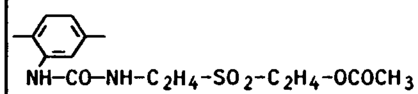 | 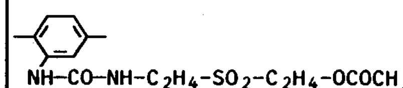 | 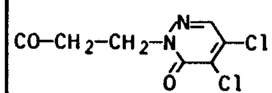 | orange-braun |
| 139 | 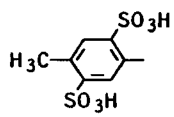 | 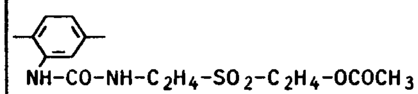 | 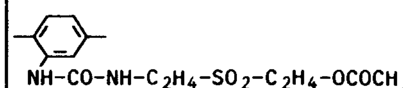 | 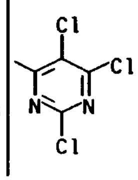 | orange-braun |

Tabelle 11 (Forts.)

| Bsp. Nr. | D1 | D2 | K | X | Farbton auf Baumwolle |
|---|---|---|---|---|---|
| 140 | 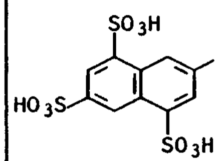 | 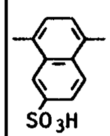 | 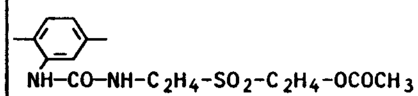 | 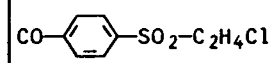 | braun |
| 141 | 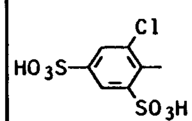 | 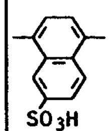 | 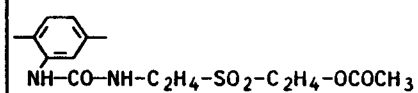 | 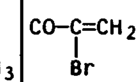 | braun |
| 142 | 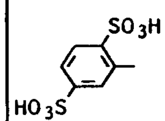 | 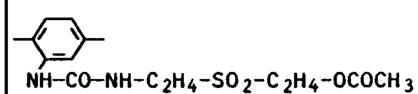 | 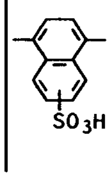 | $CO-CH_2-CH_2-Cl$ | braun |

Tabelle 11 (Forts.)

| Bsp. Nr. | D1 | D2 | K | X | Farbton auf Baumwolle |
|---|---|---|---|---|---|
| 143 | 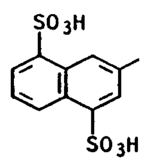 | 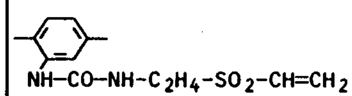 | 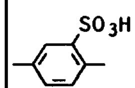 | 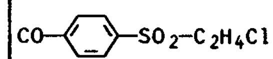 | braun |
| 144 | 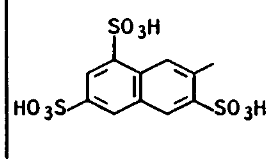 | 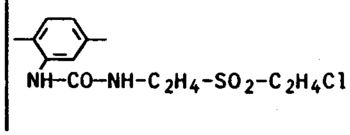 | 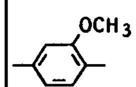 | 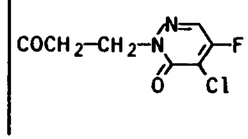 | braun |

## Patentansprüche

1. Reaktivfarbstoffe der Formel I

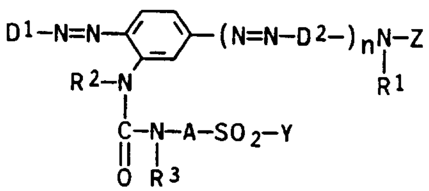

(I),

in der

| | |
|---|---|
| n | 0 oder 1, |
| $R^1$, $R^2$ und $R^3$ | gleich oder verschieden sind und unabhängig voneinander jeweils Wasserstoff, $C_1$-$C_4$-Alkyl oder Phenyl, |
| A | $C_2$-$C_8$-Alkylen, das gegebenenfalls durch 1 bis 3 Sauerstoffatome, Iminogruppen oder $C_1$-$C_4$-Alkyliminogruppen unterbrochen ist, |
| Y | Vinyl oder einen Rest der Formel -$CH_2$-$CH_2$-Q, wobei Q für eine unter alkalischen Reaktionsbedingungen abspaltbare Gruppe steht, |
| $D^1$ | Phenyl oder Naphthyl, wobei diese Reste ein- oder mehrfach durch Hydroxysulfonyl, Carboxyl, $C_1$-$C_4$-Alkoxycarbonyl, Cyano, $C_1$-$C_4$-Alkyl, $C_1$-$C_4$-Alkoxy, Halogen, Nitro oder Vinylsulfonyl oder einfach durch gegebenenfalls substituiertes Phenylazo oder gegebenenfalls substituiertes Naphthylazo substituiert sein können, |
| $D^2$ | gegebenenfalls substituiertes Phenylen oder gegebenenfalls substituiertes Naphthylen und |
| Z | einen reaktiven Rest bedeuten, |

mit der Maßgabe, daß

a) n null bedeutet, wenn $D^1$ durch gegebenenfalls substituiertes Phenylazo oder gegebenenfalls substituiertes Naphthylazo substituiert ist, und

b) der reaktive Rest Z sich nicht aus der Triazinreihe ableitet, wenn n null und $D^1$ Dihydroxysulfonylphenyl oder Trihydroxysulfonylnaphthyl bedeuten.

2. Reaktivfarbstoffe nach Anspruch 1, dadurch gekennzeichnet, daß

| | |
|---|---|
| n | null, |
| $R^1$, $R^2$ und $R^3$ | jeweils Wasserstoff, |
| A | $C_2$-$C_4$-Alkylen, das gegebenenfalls durch ein Sauerstoffatom unterbrochen ist, und |
| $D^1$ | Phenyl oder Naphthyl, wobei diese Reste durch Hydroxysulfonyl ein- bis dreifach substituiert sind, bedeuten. |

3. Reaktivfarbstoffe nach Anspruch 1, dadurch gekennzeichnet, daß Z einen Rest aus der Pyrazin-, Pyrimidin-, Chinoxalin-, Triazin-, Vinylsulfonyl-oder Acryloylreihe bedeutet.

4. Verwendung der Reaktivfarbstoffe gemäß Anspruch 1 zum Färben oder Bedrucken von Hydroxygruppen oder Stickstoffatome aufweisenden organischen Substraten.

## Claims

**1.** A reactive dye of the formula I

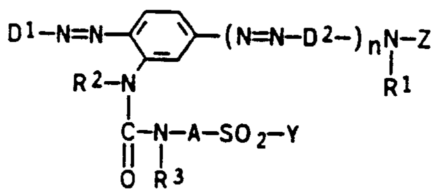

(I)

where
n is 0 or 1,
$R^1$, $R^2$ and $R^3$ are identical or different and, independently of one another, are each hydrogen, $C_1$-$C_4$-alkyl or phenyl,
A is $C_2$-$C_8$-alkylene which may be interrupted by from 1 to 3 oxygen atoms, imino groups or $C_1$-$C_4$-alkylimino groups,
Y is vinyl or a radical of the formula $-CH_2-CH_2-Q$, where Q is a group which can be eliminated under alkaline reaction conditions,
$D^1$ is phenyl or naphthyl, where these radicals may be monosubstituted or polysubstituted by hydroxysulfonyl, carboxyl, $C_1$-$C_4$-alkoxycarbonyl, cyano, $C_1$-$C_4$-alkyl, $C_1$-$C_4$-alkoxy, halogen, nitro or vinylsulfonyl or monosubstituted by unsubstituted or substituted phenylazo or by unsubstituted or substituted naphthylazo,
$D^2$ is unsubstituted or substituted phenylene or unsubstituted or substituted naphthylene and
Z is a reactive radical,
with the proviso that
a) n is zero when $D^1$ is substituted by unsubstituted or substituted phenylazo or by unsubstituted or substituted naphthylazo, and
b) the reactive radical Z is not derived from the triazine series when n is zero and $D^1$ is dihydroxysulfonylphenyl or trihydroxysulfonylnaphthyl.

**2.** A reactive dye as claimed in claim 1, wherein
n is zero,
$R^1$, $R^2$ and $R^3$ are each hydrogen,
A is $C_2$-$C_4$-alkylene which nay be interrupted by an oxygen atom and
$D^1$ is phenyl or naphthyl, where these radicals are mono-substituted to trisubstituted by hydroxysulfonyl.

**3.** A reactive dye as claimed in claim 1, wherein Z is a radical from the pyrazine, pyrimidine, quinoxaline, triazine, vinylsulfonyl or acryloyl series.

**4.** A method of using a reactive dye as claimed in claim 1 for dyeing or printing organic substrates containing hydroxyl groups or nitrogen atoms.

## Revendications

**1.** Colorants reactifs de formule I

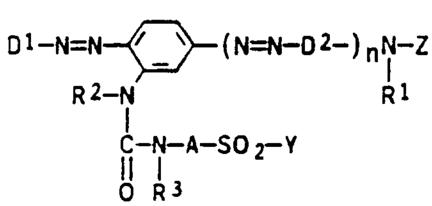

dans laquelle

| | |
|---|---|
| n | est mis pour 0 ou 1, |
| $R^1$, $R^2$ et $R^3$ | sont identiques ou différents et représentent chacun, indépendamment les uns des autres, un atome d'hydrogène ou un reste alkyle en $C_1$-$C_4$ ou phényle, |
| A | represente un reste alkylène en $C_2$-$C_8$ qui est eventuellement interrompu par 1 a 3 atomes d'oxygène, groupements imino ou groupements (alkyle en $C_1$-$C_4$)imino, |
| Y | représente un reste vinyle ou un reste de formule $-CH_2-CH_2-Q$, Q étant mis pour un groupement enlevable dans des conditions de reaction alcalines, |
| $D^1$ | représente un reste phényle ou naphtyle, ces restes pouvant être substitués une ou plusieurs fois par des groupements hydroxysulfonyle, carboxyle, (alcoxy en $C_1$-$C_4$)-carbonyle, cyano, alkyle en $C_1$-$C_4$, alcoxy en $C_1$-$C_4$, par des atomes d'halogène, par des groupements nitro ou vinylsulfonyle, ou pouvant être substitués une fois par un groupement phénylazo éventuellement substitué ou naphtylazo éventuellement substitué, |
| $D^2$ | représente un reste phénylène éventuellement substitué ou naphtylène éventuellement substitué et |
| Z | représente un reste réactif, |

étant spécifié que

a) n est mis pour 0 lorsque $D^1$ est substitué par un groupement phénylazo éventuellement substitué ou naphtylazo éventuellement substitué, et que

b) le reste réactif Z ne dérive pas de la série de la triazine lorsque n est mis pour 0 et que $D^1$ représente un groupement dihydroxysulfonylphényle ou trihydroxysulfonylnaphtyle.

**2.** Colorants réactifs selon la revendication 1, caractérisés en ce que

| | |
|---|---|
| n | est mis pour 0, |
| $R^1$, $R^2$ et $R^3$ | représentent chacun un atome d'hydrogène, |
| A | représente un reste alkylène en $C_2$-$C_4$ qui est éventuellement interrompu par un atome d'oxygène et |
| $D^1$ | représente un reste phényle ou naphtyle, ces restes étant substitues une à trois fois par des groupements hydroxysulfonyle. |

**3.** Colorants reactifs selon la revendication 1, caractérisés en ce eue Z représente un reste de la série de la pyrazine, de la pyrimidine de la quinoxaline, de la triazine, du vinylsulfonyle ou de l'acryloyle.

**4.** Utilisation des colorants reactifs selon la revendication 1 pour la teinture ou l'impression de substrats organiques comportant des groupements hydroxy ou des atomes d'azote.